# EUROPÄISCHE PATENTSCHRIFT

(11) **EP 2 048 564 B1**
(45) Veröffentlichungstag und Bekanntmachung des Hinweises auf die Patenterteilung: **11.03.2020**
(21) Anmeldenummer: 08017347.9
(22) Anmeldetag: 02.10.2008
(51) Int. Cl.: G05D 23/02, G05D 23/13

(54) **Einstellbarer Regelspalt**
Adjustable control gap
Intervalle de réglage réglable

(30) Priorität: 11.10.2007 DE 102007049089
(43) Veröffentlichungstag der Anmeldung: 15.04.2009
(73) Patentinhaber: Grohe AG, 58675 Hemer (DE)
(72) Erfinder: Huck, Kai, 58300 Wetter (DE); Riedel, Björn, 44795 Bochum (DE)

(56) Entgegenhaltungen:
- EP-A1- 1 128 104
- EP-A2- 1 246 039
- WO-A1-96/16362
- DE-A1- 10 202 560
- DE-B- 1 164 779
- FR-A1- 2 921 709

## Beschreibung

Die Erfindung betrifft ein Thermostatventil gemäß dem Oberbegriff des Patentanspruchs 1.

Bekannte thermostatische Mischeinrichtungen arbeiten mit einem als Hohlschieber ausgebildeten Ventilkörper, der mit einem Dehnungselement gekoppelt ist, wobei mit dem Ventilkörper das Verhältnis des zulaufenden Kalt- und Heißwassers geregelt wird. Die Temperatur des von der Mischeinrichtung abgegebenen Mischwassers soll dabei möglichst gleich bleibend der durch die Temperaturvorwahl eingestellten Temperatur entsprechen.

Die Regelgüte der Mischeinrichtung bei verschiedenen Betriebsbedingungen ist dabei abhängig von der Größe des Regelspalts. Als Regelspalt wird die Summe der Querschnittsbreiten des Kalt- und Heißwasserzulaufs beiderseits des Ventilkörpers bezeichnet.
Die Größe des Regelspalts ist üblicherweise von der Summe der Toleranzen der den Regelspalt bildenden Bauteile abhängig. Die Addition der Einzeltoleranzen ergibt die Gesamttoleranz des Regelspalts.
Ist der Regelspalt zu groß oder zu klein, verlängern sich die Einstellverhältnisse des Regelkreises, die Regelabweichungen bei den voreingestellten Temperaturen sind zu groß oder die Temperatur des Mischwassers fängt an zu schwingen. Je nach Bauart und Größe des Thermostatventils muss der Regelspalt daher ein ganz bestimmtes Verhältnis zum Gesamthub des Ventilkörpers aufweisen. Um bei einem Thermostatventil die gestellten Anforderungen bezüglich der Regelgüte zu erreichen, indem die Maße sämtlicher Bauteile, die sich auf die Toleranzen des Regelspalts auswirken exakt zu fertigen, ist ein hoher Fertigungsaufwand notwendig.

Aus der DE 100 07 906 A1 ist eine Sanitärarmatur mit einem Thermostatventil bekannt, das aus einer Baueinheit aus Schraubhülse, Kopfstück, Thermostat und Ventilkörper besteht. Beim Einbau des Thermostatventils wird die Baueinheit in das Sanitärarmaturgehäuse eingeschraubt bis der Ventilkörper stirnseitig mit dem Ventilsitz im Sanitärarmaturgehäuse zu Anlage gelangt. In diesem Zustand ist die Regelspaltweite gleich Null. Das Kopfstück muss daher zur Einstellung des Regelspalts wieder zurückgedreht werden. Die Regelspaltweite wird dabei über das Gewinde des Kopfstsücks und dem zugehörigen Drehwinkel berechnet. Nachteilig daran ist, dass bei einem Austausch des Thermostatventils der Regelspalt neu eingestellt werden muss.

Aus der EP 1 128 104 A1 ist ferner noch eine thermostatgeregelte Mischbatterie bekannt, bei der ein Thermostatventil in das Gehäuse der Armatur eingesetzt wird. Bei der Montage der Thermostatventils werden verschiedene Abschnitte des Thermostatventils, wie etwa ein Kopfteil, ein Ventilkörper und ein Bodenteil, nacheinander in das Armaturengehäuse eingesetzt. Abschließend erfolgt eine Einstellung des Regelspaltes zwischen diesen Teilen über eine Gewindeverbindung zwischen dem Kopfteil und dem umgebenden Gehäuse. EP 1 246 039 A2 und DE 102 02 560 A1 gehören auch zum Stand der Technik.

Vor diesem Hintergrund besteht die Aufgabe der Erfindung darin, ein Thermostatventil mit einem definierten Regelverhalten ohne hohen Fertigungs- und Montageaufwand herzustellen.

Diese Aufgabe wird durch eine Thermostatventil mit den Merkmalen des Patentanspruchs 1 gelöst. Vorteilhafte Ausgestaltungen der Erfindung sind Gegenstand der Unteransprüche.

Mit der Erfindung wird ein Thermostatventil für zwei Flüssigkeiten unterschiedlicher Temperatur, wie z. B. Kalt- und Heißwasser, bereitgestellt, das einen Ventileinsatz bzw. ein Gehäuse mit je einer Einlassöffnung für jede der Flüssigkeiten und eine Auslassöffnung umfasst. Weiterhin weist es eine Stellvorrichtung zur Einstellung der Temperatur der gemischten Flüssigkeit und ein Regelelement auf, das einen thermostatischen Temperaturfühler und einen Ventilkörper in Form eines Doppelventilsitzschiebers umfasst, welcher zur Einstellung der Größe der Einlassöffnung für die Flüssigkeiten axial innerhalb des Ventileinsatzes verschieblich ist. Hierbei wirkt der Ventilkörper gegen die Kraft einer Rückstellfeder und ist zwischen Ventilsitzen angeordnet, die am Ventileinsatz vorgesehen sind. Um den Abstand zwischen den Ventilsitzen unter Berücksichtigung des verschieblichen Ventilkörpers frei einstellen zu können, ist der Ventileinsatz zweiteilig vorgesehen. Der Ventileinsatz wird aus einem ersten Gehäuseteil, dem Kopfstück und einem zweiten Gehäuseteil, dem Bodenteil gebildet, die linear verschieblich zueinander angeordnet sind. Hierbei werden ein erster Ventilsitz am Kopfstück des Ventileinsatzes und ein zweiter Ventilsitz am Bodenteil des Ventileinsatzes gebildet. Damit ist der Regelspalt, also die Summe der Querschnittsbreiten für die Einlassöffnungen der beiden Flüssigkeiten frei einstellbar. Je nach Abmessungen des Thermostatventils und gewünschter Durchflussmenge kann dieser daher bestimmten Erfordernissen angepasst werden.

Zu Einstellung des Regelspalts am Thermostatventil werden in einem ersten Fertigungszustand das Kopfstück des Ventileinsatzes, an dem sich der erste Ventilsitz befindet, und das Bodenteil, an dem sich der zweite Ventilsitz befindet, mit Anschlag an dem Ventilkörper anliegen. In einem zweiten Fertigungszustand ist durch eine Relativverschiebung des Kopfstücks gegenüber dem Bodenteil ein definierter Spalt zwischen einem Ventilsitz und dem Ventilkörper vorgesehen.

Dabei ist an dem Kopfstück und dem Bodenteil ein Gewinde vorgesehen, so dass die beiden Gehäuseteile miteinander verbunden werden können. Hierbei kann die genaue Größe des Regelspalts und somit der definierte Spalt zwischen Ventilsitz und Ventilkörper über ein Verdrehen der Ventileinsatzteile in Abhängigkeit von der Gewindesteigung genau eingestellt werden.

Nach der Einstellung des Regelspalts ist es vorteilhaft, die Position der Gehäuseteile mittels einer Klebe- oder Schweißverbindung zu sichern, so dass bei der weiteren Montage des Thermostateinsatzes keine Verschiebung oder Verstellung mehr stattfindet und die vorbestimmte Regelgüte beijedem Bauteil eingehalten werden kann. Gerade punktuelle Ultraschallschwaißverbindungen haben sich hierbei bewährt, da durch diese die definiert lösbare Verbindung gemäß der Erfindung hergestellt werden kann. Durch ein bestimmtes Drehmoment, das auf die beiden Gehäuseteile aufgebracht wird, kann die Verbindung gelöst und gegebenenfalls eine Neueinstellung des Regelspalts vorgenommen werden.

Die Erfindung wird nachfolgend anhand eines Ausführungsbeispiels und unter Bezugnahme auf die Zeichnung näher erläutert. Es zeigt:

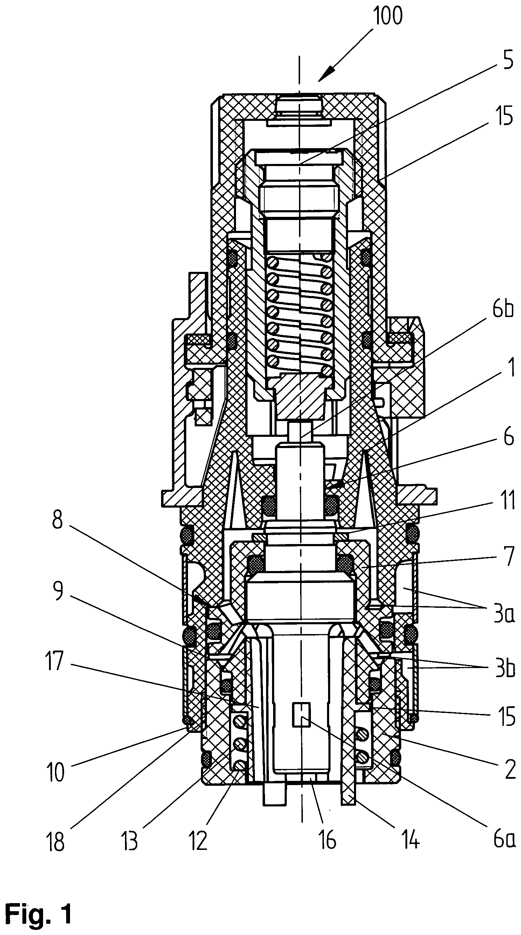

Figur 1 einen erfindungsgemäßes Thermostatventil im Längsschnitt.

Figur 1 zeigt einen Thermostatventileinsatz 100 im Längsschnitt, wie er in eine dafür vorgesehene Öffnung oder Bohrung eines Sanitärarmaturengehäuses als Baueinheit eingesetzt werden kann. Der Thermostatventileinsatz 100 wird von einem Kopfstück 1 und einem Bodenteil 2 gebildet, die axial verschieblich zueinander angeordnet sind. In dem Thermostatventiteinsatz 100 ist ein Ventilkörper 7 in Form eines Doppelventilsitzschiebers axial begrenzt verschiebbar angeordnet. Koaxial zum Doppelventilsitzschieber 7 ist ein Thermostat 6 vorgesehen, an dem der Doppelventilsitzschieber 7 mittels eines Sprengrings 11 befestigt ist. An einer inneren Stirnseite 12 des Bodenteils 2 ist eine Rückstellfeder 13 abgestützt, die andererseits an einem Flansch 15 einer Hülse 14, die in Verbindung mit dem Doppelventilsitzschieber 7 steht, anliegt, so dass der Thermostat 6 in Richtung auf das Kopfstück 1 gedrückt wird. Der Thermostat 6 liegt mit seinem axial auslenkbaren Stößel 6b an einer Temperaturwählvorrichtung 5 an, über die mittels eines Drehgriffs 15 ein Sollwert der Mischwassertemperatur eingestellt werden kann. Bei einer Drehbewegung des Drehgriffs 15 wird daher die Temperaturwähleinrichtung 5 axial zum Kopfstück 1 bewegt, wobei diese Bewegung von dem Stößel 6b auf den Thermostaten 6 und damit auf den Doppelventilsitzschieber 7 übertragen wird. Durch einen Fleißwassereinlass 3a und einen Kaltwassereinlass 3b fließt je nach Stellung des Doppelventilsitzschiebers 7 Wasser durch dafür vorgesehene Öffnungen, die so ausgeformt sind, dass eine optimale Vermischung der beiden unterschiedlichen Temperaturen stattfinden kann.

Der Thermostat 6 ist koaxial zur Mittelachse des Thermostatventileinsatzes 100 angeordnet und weist stromabwärts im Bereich des Mischwassers einen Temperaturfühlbereich 6a auf, der sich bis zum Mischwasserauslass 16 im Bodenteil 2 erstreckt.

Der vorstehend beschriebene Thermostatventileinsatz 100 wird als Ganzes in eine dafür vorgesehene Öffnung eines Sanitärarmaturengehäuses eingesetzt und hat folgende Funktionsweise:
Die Mischwassersollwerttemperatur wird mit der Temperaturvorwähleinrichtung 5 durch eine entsprechende Axialverschiebung des Thermostaten 6 mit dem Doppelventilsitzschieber 7 in die Axialposition zur Erzeugung der erforderlichen Einlassquerschnitte 3a, 3b eingestellt. Über die Einlassöffnungen 3a, 3b gelangen Heiß- und Kaltwasser in den Mischkanal 17, werden hier vermischt und gelangen in den Temperaturfühlbereich 6a. Bei Mischwassertemperaturänderungen wird die geänderte Temperatur von Temperaturfühlbereich 6a erfasst. Ein in dem Thermostaten 6 angeordneter Dehnstoff wird darauf eine axiale Auslenkung des Stößels 6a verursachen, so dass eine axiale Verschiebung des Doppelventilsitzschiebers 7 erfolgt. Die Einlassquerschnitte 3a, 3b für Kalt- und Heißwasser werden hierbei gegenläufig entsprechend verändert, so dass die Istwerttemperatur der Sollwerttemperatur des Mischwassers wieder angepasst wird.

Zusätzlich zur Abhängigkeit von der Art des Dehnstoffs, des Thermostaten 6 und der Abmessungen des Thermostatventileinsatzes 100 wird die Regelgüte des Thermostatventils entscheidend von der Größe der Einlassquerschnitte 3a, 3b für Kalt- und Heißwasser, deren Summe als Regelspalt bezeichnet wird, beeinflusst.
Um bei der Fertigung für alle Thermostatventile dieselbe Regelgüte zu erreichen, ist daher eine exakte Einstellung des Regelspalts erforderlich.

Bei dem vorliegenden Ventileinsatz 100 ist der Aufbau des Kopfstücks 1 und des Bodenteils 2 so gewählt, dass für die Einstellung des Regelspalts keine weiteren Toleranzen, als die des zwischen Kopfstück 1 und Bodenteil 2 angeordneten Gewindes 18 beachtet werden müssen. Während bei bekannten Ventilen Fertigungstoleranzen von Kopfstück 1, Bodenteil 2 und Doppelventilsitzschieber 7 bei der Berechung des Regelspalts mitbeachtet werden müssen, ermöglicht die erfindungsgemäße Bauweise, den Regelspalt exakt einzustellen. Beim Zusammenbau des Thermostatventileinsatzes 100 wird zunächst über die Temperaturvorwähleinrichtung 5 der Doppelventilsitzschieber 7 in eine Stellung gebracht, in der am Ventilsitz 8 des Kopfstücks 1 zur Anlage kommt. Dann wird das Bodenteil 2 auf Block in das Kopfstück 1 eingeschraubt, bis es zur Anlage an den Doppelventilsitzschieber 7 gelangt. In diesem Zustand liegt der Doppelventilsitzschieber 7 an beiden Ventilsitzen 8, 9 an und es ist kein Regelspalt vorhanden.
Nun wird der Bodenteil 2 wieder zurückgedreht. Über den Drehwinkel kann die Längsverschiebung des Gewindes 18 bei vorgegebener Steigung genau vorgegeben werden. Nach Einstellung des Regelspalts kann die Position beispielsweise mittels eines Ultraschallschweißpunkts fixiert werden, so dass dieser ohne Aufbringen eines bestimmten Lösemoments nicht wieder verstellt werden kann.

### Bezugszeichenliste

1 Kopfstück
2 Bodenteil
3a Einlassöffnung Kaltwasser
3b Einlassöffnung Heißwasser
5 Stellvorrichtung zur Einstellung der Temperatur und des Durchflusses
6 Regelelement
7 Ventilkörper / Doppelventilsitzschieber
8 Ventilsitz
9 Ventilsitz
11 Sprengring
12 innere Stirnseite Bodenteil
13 Rückstellfeder
14 Hülse
15 Flansch
16 Auslass
17 Mischwasserkanal
18 Gewinde

## Patentansprüche

1. Thermostatventil für zwei Flüssigkeiten unterschiedlicher Temperatur, vorzugsweise Kalt- und Heißwasser, mit
- einer Ventileinsatz-Baueinheit (100) zum Einsetzen als Ganzes in eine dafür vorgesehene Öffnung eines Sanitärarmaturengehäuses
- - die je eine Einlassöffnung (3a, 3b) für jede der Flüssigkeiten
- - eine Auslassöffnung (16) für die gemischte Flüssigkeit,
- - eine Stellvorrichtung (5) zur Einstellung der Temperatur der gemischten Flüssigkeit und
- - ein Regelelement (6) umfasst, wobei dieses
- - - einen thermostatischen Temperaturfühler (6a) und
- - - einen Ventilkörper (7) aufweist,
- - - - der zur Einstellung der Einlassöffnung (3a, 3b) für die Flüssigkeiten axial innerhalb des Ventileinsatzes (100) verschieblich ist,
- - - - gegen die Kraft einer Rückstellfeder (13) wirkt und
- - - - und zwischen Ventilsitzen (8, 9) angeordnet ist, die am Ventileinsatz (100) vorgesehen sind,
wobei
die Ventileinsatz-Baueinheit (100) zweiteilig vorgesehen ist, so dass ein erster Ventilsitz (8) an einem ersten Ventileinsatzteil, dem Kopfstück (1) und ein zweiter Ventilsitz (9) an einem zweiten Ventileinsatzteil, dem Bodenteil (2) gebildet werden, wobei die beiden Ventileinsatzteile (1, 2) linear verschieblich zueinander angeordnet sind, derart dass der Abstand zwisehen den Ventilsitzen (8, 9) über ein Gewinde (18), durch das das erste und das zweite Ventileinsatzteil (1, 2) miteinander verbunden sind, frei einstellbar ist, und wobei zwischen dem ersten und dem zweiten Ventileinsatzteil (1, 2) eine definiert lösbare Verbindung vorgesehen ist.

2. Thermostatventil gemäß Anspruch 1, **dadurch gekennzeichnet, dass** in einem ersten Fertigungszustand das erste Ventileinsatzteil (1) mit dem ersten Ventilsitz (8) und das zweite Ventileinsatzteil (2) mit dem zweiten Ventilsitz (9) mit Anschlag an dem Ventilkörper (7) anliegen und in einem zweiten Fertigungszustand ein definierter Spalt zwischen einem Ventilsitz (8, 9) und Ventilkörper (7) durch eine Relativverschiebung eines Ventileinsatzteils (2) gegenüber dem anderen Ventileinsatzteil (1) vorgesehen ist.

3. Thermostatventil gemäß Anspruch 1, **dadurch gekennzeichnet, dass** der definierte Spalt zwischen Ventilsitz (8, 9) und Ventilkörper (7) über ein Verdrehen der Ventileinsatzteile (1, 2) in Abhängigkeit von der Gewindesteigung einstellbar ist.

4. Thermostatventil gemäß einem der vorhergehenden Ansprüche, **dadurch gekennzeichnet, dass** die definiert lösbare Verbindung als eine Klebe- oder Schweißverbindung vorgesehen ist.

## Claims

1. A thermostat valve for two fluids of different temperatures, preferably cold and hot water, having
- a valve core assembly unit (100) for insertion as a whole in an opening of a sanitary fitting housing provided for this purpose, which assembly unit comprises
-- one intake opening (3a, 3b) for each of the fluids
-- an outlet opening (16) for the mixed fluid,
-- an adjustment device (5) for adjusting the temperature of the mixed fluid and
-- a control element (6), said element having
--- a thermostatic temperature sensor (6a) and
--- a valve body (7),
---- which valve body is axially displaceable in the valve core (100) for adjusting the inlet openings (3a, 3b) for the fluids,
---- acts against the force of a return spring (13) and
---- is arranged between valve seats (8, 9) which are provided on the valve core (100),
wherein
the valve core assembly unit (100) is provided in two parts
such that a first valve seat (8) is formed on a first valve core part, the head piece (1), and a second valve seat (9) is formed on a second valve core part, the bottom part (2),
wherein the two valve core parts (1, 2) are linearly displaceable relative to each other in such a way that the distance between the valve seats (8, 9) is freely adjustable via a thread (18) by which the first and the second valve core parts (1, 2) are interconnected, and wherein a defined releasable connection is provided between the first and the second valve core parts (1, 2).

2. The thermostat valve according to claim 1, **characterized in that** the first valve core part (1) with the first valve seat (8) and the second valve core part (2) with the second valve seat (9) are in abutment on the valve body (7) in a first phase of finishing and that a defined gap is provided between a valve seat (8, 9) and the valve body (7) by a relative displacement of one valve core part (2) with respect to the other valve core part (1) in a second phase of finishing.

3. The thermostat valve according to claim 1, **characterized in that** the defined gap between the valve seats (8, 9) and the valve body (7) can be adjusted as a function of the thread pitch by turning the valve core parts (1, 2).

4. The thermostat valve according to any one of the preceding claims, **characterized in that** the defined releasable connection is provided as a bonded or welded connection.

## Revendications

1. Robinet thermostatique, destinée à deux liquides de différente température, de préférence de l'eau froide et chaude, comprenant
- un ensemble d'insert de robinet (100), destiné à être inséré en tant qu'unité dans un orifice prévu à cet effet d'une monture de robinetterie sanitaire
-- qui comprend respectivement un orifice d'entrée (3a, 3b) pour chacun des liquides,
-- un orifice de sortie (16), pour le liquide mitigé,
-- un dispositif de réglage (5), destiné à régler la température du liquide mitigé et
-- un élément régulateur (6), ce dernier comportant
--- une sonde thermique (6a) thermostatique et
--- un corps de soupape (7)
---- qui pour le réglage de l'orifice d'entrée (3a, 3b) pour les liquides est déplaçable en direction axiale à l'intérieur de l'insert de robinet (100),
---- agit à l'encontre de la force d'un ressort de rappel (13) et
---- est placé entre des sièges de soupape (8, 9) qui sont prévus sur l'insert de soupape (100) ;
l'ensemble d'insert de robinet (100) étant prévu en deux parties,
de sorte qu'un premier siège de soupape (8) soit formé sur une première partie d'insert de soupape, la partie haute (1) et un deuxième siège de soupape (9) soit formé sur une deuxième partie d'insert de soupape, la partie basse (2) ;
les deux parties de l'insert de soupape (1, 2) étant placées en étant déplaçables de manière linéaire l'une par rapport à l'autre, de telle sorte que l'écart entre les sièges de soupape (8, 9) soit librement réglable par l'intermédiaire d'un filetage (18) reliant ensemble la première et la deuxième parties d'insert de soupape (1, 2) et entre la première et la deuxième partie d'insert de soupape (1, 2) étant prévue une liaison amovible définie.

2. Robinet thermostatique selon la revendication 1, **caractérisé en ce que** dans le premier état de fabrication, la première partie d'insert de soupape (1) est adjacente par le premier siège de soupape (8) et la deuxième partie d'insert de soupape (2) est adjacente par le deuxième siège de soupape (9) avec une butée au corps de soupape (7) et dans un deuxième état de fabrication, un interstice défini est prévu entre un siège de soupape (8, 9) et un corps de soupape (7), par un déplacement relatif d'une partie d'insert de soupape (2) par rapport à l'autre partie d'insert de soupape (1).

3. Robinet thermostatique selon la revendication 1, **caractérisé en ce que** l'interstice défini entre le siège de soupape (8, 9) et le corps de soupape (7) est réglable par une rotation des parties d'insert de soupape (1, 2), en fonction du pas de filetage.

4. Robinet thermostatique selon l'une quelconque des revendications précédentes, **caractérisé en ce que** la liaison amovible définie est prévue sous la forme d'une liaison par collage ou par soudage.
